# EUROPÄISCHE PATENTSCHRIFT

(11) **EP 3 257 348 B1**
(45) Veröffentlichungstag und Bekanntmachung des Hinweises auf die Patenterteilung: **17.04.2019**
(21) Anmeldenummer: 17401058.7
(22) Anmeldetag: 23.05.2017
(51) Int. Cl.: A01C 7/04, A01C 21/00, A01C 7/10

(54) **LANDWIRTSCHAFTLICHE EINZELKORNSÄMASCHINE**
AGRICULTURAL SINGLE GRAIN SEEDER
SEMOIR AGRICOLE MONO-GRAINE

(30) Priorität: 15.06.2016 DE 102016110920
(43) Veröffentlichungstag der Anmeldung: 20.12.2017
(73) Patentinhaber: Amazonen-Werke H. Dreyer GmbH & Co. KG, 49205 Hasbergen (DE)
(72) Erfinder: Wessels, Mario, 27777 Ganderkesee (DE)

(56) Entgegenhaltungen:
- EP-A2- 2 777 376
- EP-B1- 2 055 168
- WO-A1-2010/002754
- WO-A1-2015/048817
- US-A1- 2011 046 776

## Beschreibung

Die Erfindung betrifft eine landwirtschaftliche Einzelkornsämaschine mit Vereinzelungsvorrichtung gemäß des Oberbegriffes des Patentanspruches 1.

Eine derartige landwirtschaftliche Einzelkornsämaschine mit Vereinzelungsvorrichtung ist in der DE10 2007 062 968 A1 beschrieben.

Die Einzelkornsämaschine weist eine Vereinzelungsvorrichtung auf, welche in einem Gehäuse angeordnet ist. In dem Gehäuse ist ein Vereinzelungselement angeordnet, welches als rotierend angetriebene, austauschbare Lochscheibe ausgeführt ist. Die Lochscheibe weist in regelmäßigen Abständen Aussparungen auf, die geeignet sind, einzelne Körner eines körnigen Gutes, vorzugsweise Saatgut, zu transportieren. Das Gehäuse wird mittels des Vereinzelungselements in einen ersten und einen zweiten Bereich unterteilt. Beide Bereiche stehen räumlich lediglich durch die Aussparungen der Lochscheibe in Verbindung. Zwischen dem ersten und dem zweiten Gehäusebereich, erzeugt ein Gebläse eine an den Aussparungen anliegende Druckdifferenz. Die Druckdifferenz bewirkt eine Anlagerung einzelner Körner in den Aussparungen der Lochscheibe.

Mit einer Einzelkornsämaschine werden Saatgüter verschiedener Pflanzenkulturen ausgebracht. Dabei unterscheiden sich die Saatkörner hinsichtlich Größe und Form erheblich, wie die typischerweise in Einzelkornsaat angebauten Pflanzenkulturen Mais, Raps oder Sonnenblumen beispielhaft zeigen. Um derart unterschiedliche Saatkörner mit konstanter Zuverlässigkeit ausbringen zu können, werden je nach anzupflanzender Kultur die Vereinzelungselemente, insbesondere die Lochscheiben oder Vereinzelungstrommeln, ausgetauscht. Verschiedene Vereinzelungselemente unterscheiden sich beispielsweise anhand der Größe und/oder Abstände der Aussparungen. In der Folge dieses Austauschens der Vereinzelungselemente sind weitere Änderungen der Einstell- und/oder Arbeitsparameter der Einzelkornsämaschine und/oder Vereinzelungsvorrichtung notwendig. Ein Bediener muss diese Einstellungen vornehmen, um die Einzelkornsämaschine auf die bevorstehende Arbeitsaufgabe vorzubereiten.

Nachteilig ist dabei, dass dem Bediener während des notwendigen Einstellvorganges Fehler unterlaufen können. Dadurch kann sich beispielsweise ein uneinheitliches Ausbringbild oder eine Ablage der Saatkörner in einem für die anzupflanzende Pflanzenkultur ungünstigen Abstand ergeben.

Wie die Auswirkungen derartiger Bedienfehler abzumildern sind, beschreibt die EP 2 055 168 B1. Darin wird eine als Zentrifugaldüngerstreuer ausgeführte landwirtschaftliche Arbeitsmaschine beschrieben, deren Streuscheiben zur Anpassung an die bevorstehende arbeits- bzw. Ausbringsaufgabe austauschbar sind. Mittels einer Erfassungsvorrichtung erkennt das System welcher Streuscheibentyp verbaut ist. Der Bediener gibt die gewünschten Einstellparameter für die bevorstehende Arbeitsaufgabe ein. Durch einen Vergleich der eingegebenen Einstellparameter mit den für den verbauten und vom System erkannten Streuscheibentyp in einem Speicher hinterlegten Einstellparametern überprüft das System, ob die bevorstehende Arbeitsaufgabe mit den vom Bediener eingegebenen Sollwerten mit dem verbauten Streuscheibentyp durchführbar ist. Liefert der Vergleich Abweichungen, wird eine Warnmeldung ausgegeben, die den Bediener auf die Abweichungen hinweist.

Obwohl bei dieser Ausführungsform Bedienfehler bemerkt werden und korrigiert werden können, ist hier nachteilig, dass der Bediener den Einstellvorgang erneut durchführen muss. Eine Neueinstellung zieht einen Zeitverlust nach sich.

Die US 2011/0046776 A1 beschreibt eine Einzelkornsämaschine, die mit einer Erfassungseinrichtung versehen ist, welche Informationen von Identifikationselementen erfasst, die Saatgutgebinden zugeordnet sind. Diese Informationen werden allerdings lediglich genutzt, um nachvollziehen zu können, welches Saatgut in einem Bereich einer landwirtschaftlichen Fläche ausgebracht worden ist. In nachteiliger Weise werden die ermittelten Informationen nicht mit den Einstellparametern der Einzelkornsämaschine in Verbindung gebracht.

Der Erfindung liegt daher die Aufgabe zugrunde, den Einstellvorgang der Einzelkornsämaschine weiter zu vereinfachen und dabei die Anfälligkeit für Bedienfehler weiter zu reduzieren.

Diese Aufgabe wird erfindungsgemäß durch die Merkmale des kennzeichnenden Teils des Anspruchs 1 gelöst.

Dadurch wird die Voraussetzung dafür geschaffen, dass die Einzelkornsämaschine selbsttätig erkennen kann, wenn die austauschbaren Vereinzelungselemente ausgetauscht werden und die Einzelkornsämaschine und/oder die Vereinzelungsvorrichtung neu eingestellt werden muss.

Damit beim Einstellvorgang der Einzelkornsämaschine und/oder der Vereinzelungsvorrichtung die korrekten Einstellungen vorgenommen werden, ist es von Vorteil, dass das Identifikationselement geeignet ist, die Art und/oder die Eigenschaften des eingesetzten Vereinzelungselements eindeutig zu charakterisieren. Sind Art und/oder Eigenschaften des Vereinzelungselements bekannt, lässt sich daraus die bevorstehende Arbeitsaufgabe ableiten. Für eine Einzelkornsämaschine bedeutet dies, dass somit die anzupflanzende Pflanzenkultur und dafür geeignete Einstellungen ermittelt werden können.

Die für die anstehende Arbeitsaufgabe geeigneten Einstellungen der Einzelkornsämaschine und/oder der Vereinzelungsvorrichtung müssen vorgenommen werden. Damit diese auf Basis des aktuell verbauten Vereinzelungselements ermittelt werden können, ist es vorteilhaft, dass mittels des Erfassungssystems Daten aus dem Identifikationselement gelesen werden können und dass auf Basis der gelesenen Daten die Einstellparameter für die landwirtschaftliche Einzelkornsämaschine und/oder die Vereinzelungsvorrichtung ermittelt werden und die Einstellung der landwirtschaftlichen Einzelkornsämaschine und/oder der Vereinzelungsvorrichtung automatisiert erfolgt. Durch diese Ausgestaltung der Erfindung reduziert sich der Arbeitsaufwand für einen Bediener der Einzelkornsämaschine darauf, das Vereinzelungselement auszutauschen. Dieser Schritt ist ohnehin notwendig, da verschiedene Saatgüter aufgrund unterschiedlicher Formen und Größen der jeweiligen Saatgutkörner verschieden ausgestaltete Vereinzelungselemente benötigen. Zudem müssen für verschiedene Saatgüter auch verschiedene Einstellungen der Einzelkornsämaschine und/oder Vereinzelungsvorrichtung gewählt werden, damit die jeweiligen Saatgutkörner der verschiedenen Saatgüter in dem jeweils für die anzupflanzende Pflanzenkultur korrekten Abstand in der Saatfurche abgelegt werden. Dies trägt zu guten Wachstumsbedingungen der einzelnen Pflanzen und damit zu einem optimierten Ertrag bei.

Die ausgelesenen Daten werden vom Erfassungssystem an eine Auswerteeinheit übertragen. Die Auswerteeinheit prüft, ob die Übertragung vollständig und fehlerfrei erfolgt ist. Zusätzlich steuert die Auswerteeinheit anschließend den Einstellvorgang der Einzelkornsämaschine und/oder der Vereinzelungsvorrichtung.

Da die erfindungsgemäße Einstellung der Einzelkornsämaschine und/oder der Vereinzelungsvorrichtung auf dem Typ des aktuell verbauten Vereinzelungselements basiert, werden für einen speziellen Typ des Vereinzelungselements stets gleiche Einstellungen vorgenommen. In einer bevorzugten Ausführungsform ist daher vorgesehen, dass das Identifikationselement einen auslesbaren Identifikationscode enthält und aus einer in einem Speicher hinterlegten Zuordnung anhand des Identifikationscodes die Einstellparameter für die landwirtschaftliche Einzelkornsämaschine und/oder die Vereinzelungsvorrichtung ermittelt werden. Ist nur ein eindeutiger Identifikationscode auszulesen, kann so die auszulesende Datenmenge reduziert werden. Dies ermöglicht eine schnellere Datenübertragung.

Weiterhin wird die Fehleranfälligkeit des Erfassungs- und/oder Übertragungsvorgangs reduziert, weil eine kleine Datenmenge in kurzer Zeit übertragen werden kann. Damit sinkt die Wahrscheinlichkeit, dass der Übertragungsvorgang gestört werden kann. Zusätzlich enthält ein Identifikationscode nur eine einzige, eindeutige Information. Wird die Übertragung dieser Information gestört und/oder unterbrochen, können weitere Übertragungsversuche unternommen werden.

Sollte der ausgelesene Identifikationscode beispielsweise aufgrund einer Fehlfunktion oder Beschädigung fehlerhaft oder gar nicht übertragen werden, kann ein Bediener die Identifikation des Typs des Vereinzelungselements vornehmen. Hierzu ist die vorteilhafterweise ebenfalls nur die Eingabe einer einzigen den Typ des Vereinzelungselements identifizierenden und/oder charakterisierenden Information notwendig. Dadurch reduziert sich auch der Aufwand für einen Bediener und dadurch die Fehleranfälligkeit des Korrekturvorgangs.

Die Einstellparameter werden bei Verwendung bzw. Erfassung eines den Typ des Vereinzelungselements charakterisierenden Identifikationscode durch die Auswerteeinheit einer in einem Speicher befindlichen Zuordnung entnommen. Dies ist vorteilhaft, weil keine Einstelldaten für die Einzelkornsämaschine und/oder die Vereinzelungsvorrichtung übertragen werden müssen und somit deren Übertragen nicht unvollständig oder fehlerhaft sein kann. Ist der Identifikationscode durch erfindungsgemäße Übertragung oder notwendige manuelle Korrektur eines Bedieners der Auswerteeinheit zugeführt, erfolgt die Einstellung der Einzelkornsämaschine und/oder der Vereinzelungsvorrichtung automatisiert auf Basis der in der in dem Speicher hinterlegten Zuordnung. Die automatisierte Einstellung schließt eine Fehlbedienung als Fehlerquelle aus.

Damit der Identifikationscode zuverlässig und reproduzierbar ausgelesen werden kann, ist vorteilhaft, dass der Identifikationscode durch die Oberflächenbeschaffenheit und/oder die Farbe des Vereinzelungselements gegeben ist. Der Bediener kann somit schon vor dem Einbau und/oder während des Einbaus des Vereinzelungselements visuell prüfen, ob er das korrekte Vereinzelungselement verbaut. Beschränkt sich das Identifikationselement nicht auf einen kleinen Bereich des Vereinzelungselements, so ist die Gefahr nur klein, kann dieser kleine Bereich beschädigt und somit der Erfassungsvorgang in zuvor beschriebener Weise gestört wird. Typischerweise bestehen derartige Vereinzelungselemente aus Metall oder Kunststoff und somit aus ein- bzw. durchfärbbaren Material. Anhand einer für den jeweiligen Typ des Vereinzelungselements spezifischen Färbung ist beispielsweise bei Verwendung von an sich bekannten optischen Erfassungsvorrichtungen eine eindeutige Identifikation des verbauten Typs des Vereinzelungselements möglich. Alternativ oder zusätzlich können in analoger Weise Charakteristika der Oberflächenbeschaffenheit, wie beispielsweise Rauigkeit oder Einprägungen, zur Charakterisierung herangezogen werden. Farbe und Oberflächencharakeristika sind in jedem Bereich des Vereinzelungselements erkennbar und einer Erfassung zugänglich. Daraus ergibt sich der Vorteil, dass die Korrekte Erfassung des Identifikationscodes nicht auf eine bestimmte relative Lage zwischen Erfassungsvorrichtung und Identifikationselement beschränkt ist. Weiter ergibt sich der Vorteil, dass die Erfassung nicht dadurch gestört werden kann, dass ein kleiner, das Identifikationselement tragende Bereich des Vereinzelungselement beschädigt wird.

In einer weiteren vorteilhaften Ausgestaltung der Erfindung ist vorgesehen, dass der Identifikationscode durch eine kontaktfrei lesbare Zeichenfolge gegeben ist. Durch eine eindeutige Zeichenfolge kann ebenso der Typ des Vereinzelungselements identifiziert und/oder charakterisiert werden. Bei Bedarf können in einer solchen Zeichenfolge weitere Informationen hinterlegt werden.

Eine derartige Zeichenfolge kann analog zur zuvor beschriebenen Weise optisch erfasst werden. Dabei kann die Zeichenfolge in Form eines ein- oder zweidimensionalen Musters (Strich- bzw. QR-Code) ausgeführt sein. Idealerweise ist dieses Muster dem Vereinzelungselement aufgedruckt oder aufgeprägt. Mittels der geeigneten Erfassungsvorrichtung wird dieses Muster beispielsweise vor/nach dem Einbau oder während des Einbaus des jeweiligen Vereinzelungselements erfasst.

Eine weitere Methode zum erfindungsgemäßen Hinterlegen einer Zeichenkette bietet die bekannte RFID-Technik. Diese bietet den Vorteil, dass das Identifikationselement nicht an der Oberfläche des Vereinzelungselements angebracht sein muss. Beispielsweise kann es in das Material des Vereinzelungselements eingearbeitet sein. Damit ist es unempfindlich gegen eine Oberflächenabnutzung und/oder -verschmutzung des verbauten Vereinzelungselements. Darüber hinaus ist keine Sichtverbindung zwischen Identifikationselement und Erfassungsvorrichtung notwendig. Dadurch ist der Erfassungsvorgang unabhängig von der relativen Lage zwischen Identifikationselement und Erfassungsvorrichtung. Dies steigert die Zuverlässigkeit des Erfassungsvorgangs.

Um beim Einstellvorgang der Einzelkornsämaschine und/oder der Vereinzelungsvorrichtung die Speichereinheit und die darin hinterlegte Zuordnung zwischen Identifikationscodes und Einstellparametern einzusparen, ist es vorteilhaft, dass das Identifikationselement die Einstellparameter für die landwirtschaftliche Einzelkornsämaschine und/oder die Vereinzelungsvorrichtung enthält. Somit können die dem Identifikationselement entnommenen Einstellparameter von der Auswerteeinheit direkt in Steuerbefehle umgesetzt und der Einzelkornsämaschine und/oder Vereinzelungsvorrichtung zugeführt werden.

Es ist von Vorteil, wenn die geeignete Erfassungsvorrichtung ein Sensor zur kontaktfreien Erfassung des Identifikationselements ist. Dadurch kann in beschriebener Weise die Erfassung schnell und zuverlässig erfolgen. Insbesondere führt dies zu einer erheblichen Zeitersparnis. Mithilfe der angeführten Ausführungsformen ist eine derartige Erfassung auch ohne Sichtverbindung zwischen Identifikationselement und Erfassungsvorrichtung möglich.

Zur Ausbringung von Saatgut weist eine typische Einzelkornsämaschine eine Vereinzelungsvorrichtung auf, welche in einem Gehäuse untergebracht ist. Dabei wird das Gehäuse durch das Vereinzelungselement derart in einen ersten und einen zweiten Bereich unterteilt, dass mittels eines Gebläses eine Druckdifferenz zwischen dem ersten und dem zweiten Bereich herstellbar ist. Durch die Druckdifferenz lagern sich einzelne Körner des körnigen Gutes in den Aussparungen des Vereinzelungselements an. Die Vereinzelungsvorrichtung weist ein Abdeck- und/oder Abstreifelement zur zeitweisen Unterbrechung der Druckdifferenz und zum Verhindern der fortdauernden Anlagerung der transportierten Körner auf. Die Einzelkornsämaschine weist ein Regulationselement zur Regelung der dem Vereinzelungselement zugeführten Saatgutmenge auf. Es ist vorteilhaft, dass die im Identifikationselement oder im Speicher hinterlegten Einstellparameter der landwirtschaftlichen Einzelkornsämaschine und/oder der Vereinzelungsvorrichtung auf der mit dem eingesetzten Vereinzelungselement zur Pflanzung vorgesehenen Pflanzenkultur basieren und zumindest die Drehzahl des Gebläses, die Position und/oder die Stellung des Abdeck- und/oder Abstreifelements und/oder die Arbeitsstellung des Regulationselements sind. Die Saatkörner verschiedener Saatgüter weisen verschiedene Größen und Formen auf und müssen für optimale Wachstumsbedingungen der jeweiligen Pflanzenkultur in verschiedenen Abständen in der Saatfurche abgelegt werden. Daher unterscheiden sich die Vereinzelungselemente zur Aussaat verschiedener Pflanzenkulturen beispielsweise hinsichtlich der Größe der Aussparungen, des Abstandes der Aussparungen untereinander oder des Abstandes der Aussparungen vom Rand des Vereinzelungselements. Damit der Vereinzelungsvorgang unabhängig vom Typ des verbauten Vereinzelungselements stets qualitativ gleichwertig ist, müssen Position und/oder Stellung des Abdeck- und/oder Abstreifelements notwendigerweise für jedes Vereinzelungselement geeignet eingestellt sein. Durch eine korrekte Einstellung wird erreicht, dass überschüssige angelagerter Körner entfernt werden und die auf diese Weise vereinzelten, in den Aussparungen transportierten Körner an geeigneter Stelle wieder freigegeben werden. Somit können die Körner einzeln abgelegt werden. Durch die Drehzahl des Gebläses kann die Stärke der Druckdifferenz eingestellt werden. Bei stärkerer Druckdifferenz lagern sich die Saatkörner sicherer in den Aussparungen an. Dadurch kann die Einzelkornsämaschine und/oder Vereinzelungsvorrichtung auch auf unterschiedlich schwere Saatkörner eingestellt werden. Ebenso muss die Menge des der Vereinzelungsvorrichtung zuströmenden Saatgutes für jedes Vereinzelungselement geeignet reguliert werden, damit sich bei den von der Art des Saatgut abhängigen verschiedenen Saatgut-Durchsätzen in den Zuführleitungen kein Saatgut staut. Dazu wird die Arbeitsstellung eines Regulationselements eingestellt. Diese Einstellungen werden erfindungsgemäß automatisiert auf Basis des ermittelten Typs des Vereinzelungselements vorgenommen.

Typische Einzelkornsämaschinen weisen zumindest einen Behälter zur Bevorratung zumindest eines körnigen Gutes auf. Dieser zumindest eine Behälter weist eine Ausflussöffnung auf, in deren Bereich ein Rührelement angeordnet ist, welches ein gleichmäßiges Ausfließen des körnigen Gutes ermöglicht. Daher ist es vorteilhaft, dass ein weiterer Einstellparameter der landwirtschaftlichen Einzelkornsämaschine und/oder der Vereinzelungsvorrichtung die Drehzahl des Rührelements ist. Durch die Erfassung des Typs des Vereinzelungselements ist die Art des bevorrateten Saatguts bekannt. Die Fließeigenschaften eines Saatguttyps, wie auch die Neigung zum Verstopfen, Verklumpen oder zur Brückenbildung werden durch Form und Größe der Körner bestimmt. Daher gewährleistet eine saatgutspezifische Einstellung des Rührelements das gleichmäße Ausfließen in besonders vorteilhafter Weise.

Typische Einzelkornsämaschinen können für jede anzulegende Saatreihe eine eigene erfindungsgemäße Vereinzelungsvorrichtung aufweisen. Jede Vereinzelungsvorrichtung muss dann mit einem geeigneten Vereinzelungselement ausgerüstet sein. Daher ist es besonders von Vorteil, dass bei Verwendung mehrerer Vereinzelungsvorrichtungen anhand der Erfassung der Daten der Identifikationselemente der jeweils eingesetzten Vereinzelungselemente festgestellt wird, ob alle eingesetzten Vereinzelungselemente identisch sind und bei widersprüchlichen Daten ein geeigneter Warnhinweis ausgegeben wird. Sollten Vereinzelungselemente von uneinheitlichem Typ verbaut sein, hat dies ein uneinheitliches Säbild zur Folge. Zudem liegen der Auswerteeinheit uneinheitliche Daten vor, die eine erfindungsgenmäße Einstellung der Einstellparameter der Einzelkornsämaschine und/oder der Vereinzelungsvorrichtung verhindert.

Damit die Einstellung Einzelkornsämaschine und/oder der Vereinzelungsvorrichtung auch nach erfolgter erfindungsgemäßer, automatisierter Einstellung an spezielle Anforderungen angepasst werden kann, ist es von Vorteil, dass nach erfolgter automatisierter Einstellung der Einstellparameter der landwirtschaftlichen Einzelkornsämaschine und/oder der Vereinzelungsvorrichtung einem Bediener die Kontrolle und/oder Korrektur der Einstellparameter möglich ist. Dazu werden dem Bediener die vorgenommenen Einstellung in geeigneter Weise, beispielsweise auf dem Bildschirm eines Bedienterminals, angezeigt. Dadurch ist gewährleistet, dass der Bediener die Einstellparameter beispielsweise bei besonderen Arbeitsbedingungen seinen Wünschen entsprechend verändern und/oder optimieren kann. Insbesondere ermöglicht diese Ausgestaltung, dass die Einzelkornsämaschine und/oder Vereinzelungsvorrichtung auch bei einem beispielsweise beschädigungsbedingten Ausfall des Erfassungssystems in herkömmlicher Weise eingestellt werden kann.

Zusammengefasst sind die dem Identifikationselement direkt oder mittels eines Identifikationscodes über eine in einem Speicher hinterlegte Zuordnung entnehmbaren Einstellparameter der landwirtschaftlichen Einzelkornsämaschine und/oder der Vereinzelungsvorrichtung zumindest die Drehzahl des Gebläses, die Position und/oder die Stellung des Abdeck- und/oder Abstreifelements und/oder die Arbeitsstellung des Regulationselements und/oder die Drehzahl des Rührelements.

Als Vereinzelungselement kann eine Lochscheine oder eine Vereinzelungstrommel dienen.

Weitere Einzelheiten der Erfindung sind der Beispielsbeschreibung und den Zeichnungen zu entnehmen. Die Zeichnungen zeigen
- Fig.1: eine landwirtschaftliche Einzelkornsämaschine in perspektivischer Ansicht von hinten,
- Fig.2: eine Vereinzelungsvorrichtung in Explosionsdarstellung,
- Fig. 3: eine Lochscheibe in perspektivischer Ansicht,
- Fig.4: eine weitere Lochscheibe in perspektivischer Ansicht,
- Fig.5: eine Lochscheibe mit besonderer Oberflächenbeschaffenheit in perspektivischer Ansicht,
- Fig.6: eine Lochscheibe mit optisch auslesbarem, zweidimensionalen Identifikationscode in perspektivischer Ansicht und
- Fig.7: eine Lochscheibe mit im Scheibenmaterial eingebetteten Identifikationselement in perspektivischer Ansicht.

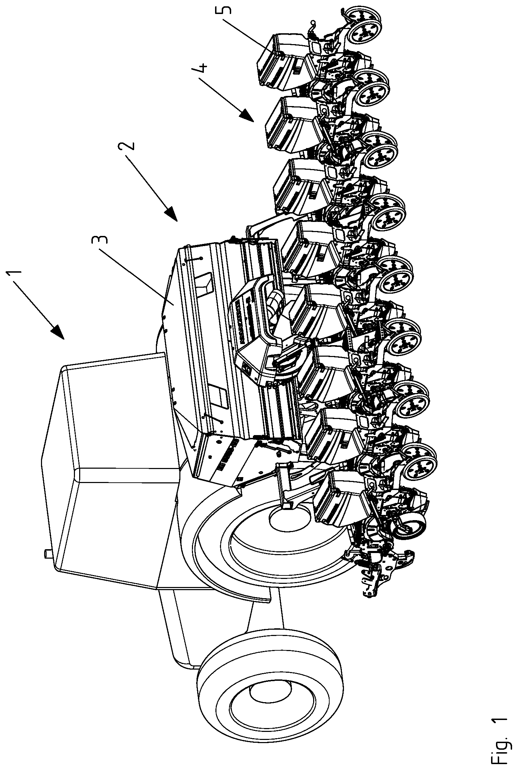

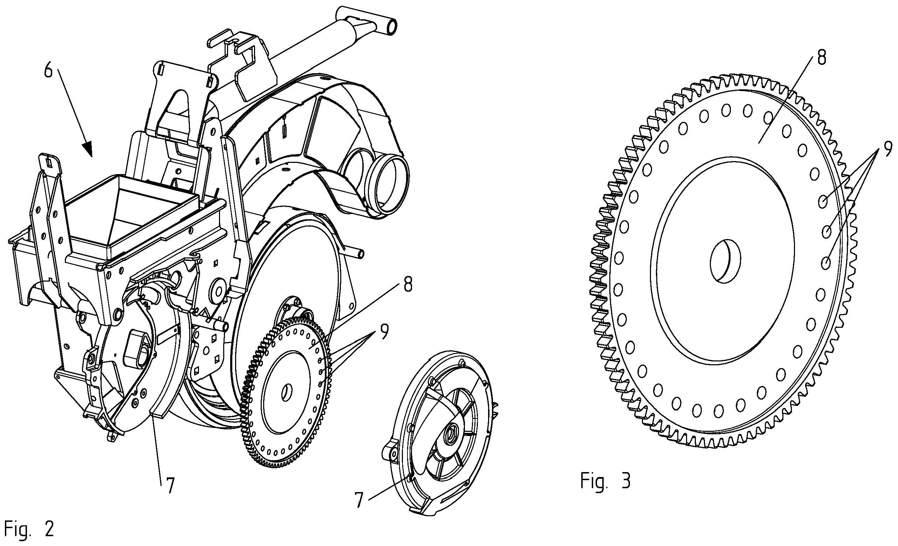

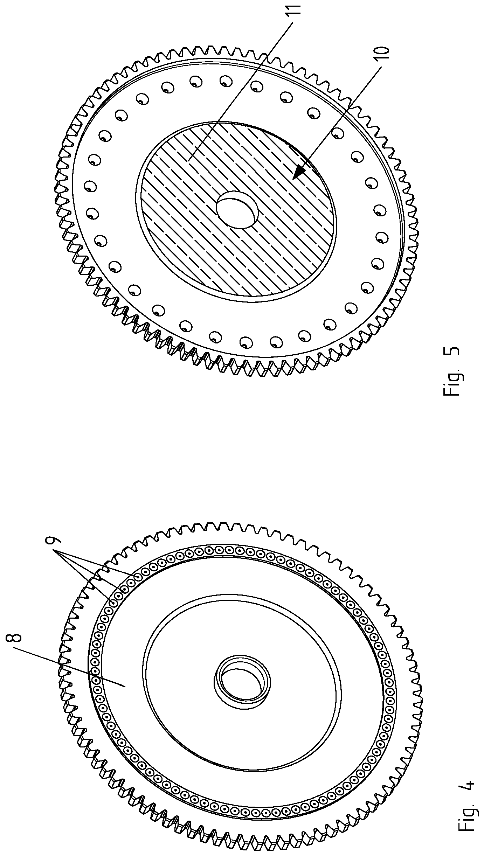

An den Dreipunktkraftheber einer landwirtschaftlichen Zugmaschine 1 wird eine landwirtschaftliche Einzelkornsämaschine 2 angebaut, wie es Fig.1 zeigt. Die Einzelkornsämaschine besteht aus einem Rahmen, auf dem sich ein Vorratsbehälter 3 zur Bevorratung von Düngemittel abstützt. An dem Rahmen der Einzelkornsämaschine sind mehrere Säaggregate 4 angeordnet. Jedes Säaggregat 4 weist einen Behälter 5 zur Aufnahme eines Saatgutvorrats auf. Unterhalb des Behälters 5 ist eine Vereinzelungsvorrichtung 6 angeordnet, wie sie in Fig. 2 gezeigt ist. Die Vereinzelungsvorrichtung 6 weist eine Gehäuse 7 auf. In dem Gehäuse 7 befindet sich ein als Lochscheibe 8 ausgebildetes Vereinzelungselement, wie es in den Fig. 3 bis 7 gezeigt ist. Die Lochscheibe 8 unterteilt das Gehäuse 7 in einen ersten und einen zweiten Bereich, zwischen denen mittels eines nicht dargestellten Gebläses eine Druckdifferenz herstellbar ist. Eine räumliche Verbindung zwischen beiden Bereichen besteht ausschließlich über in den Lochscheiben angeordnete Aussparungen 9. Die Lochscheiben 8 sind austauschbar ausgeführt und unterschieden sich hinsichtlich Größe und gegenseitigem Abstand der Aussparungen 9, wie die Fig. 3 und 4 zeigen.

In dem in den Figuren dargestellten Ausführungsbeispiel ist das Vereinzelungselement als Lochscheibe 8 ausgeführt. Ebenso ist eine Ausführung als Vereinzelungstrommel möglich.

Aufgrund der durch das Gebläse erzeugten Druckdifferenz lagern sich einzelne Saatkörner an den Aussparungen 9 an und werden somit von der Lochscheibe 8 entlang der Umfangsrichtung der Lochscheibe 8 transportiert. Dabei passieren die transportierten Saatkörner nicht dargestellte Abstreifelemente, welche überschüssiges Saatgut abstreifen. Dadurch wird sichergestellt, dass in den Aussparungen 9 stets nur ein Saatkorn transportiert wird. Dies schließt aus, dass im Boden an derselben Stelle mehr als ein Saatkorn abgelegt wird.

Die vereinzelt in den Aussparungen 9 transportierten Saatkörner passieren im Anschluss ebenfalls nicht dargestellte Abdeckelemente. Diese Abdeckelemente bedecken auf der saatgutfreien Seite der Lochscheibe 8 zweitweise die Aussparungen 9. Damit wird an den bedeckten Aussparungen 9 die Druckdifferenz zwischen den beiden Bereichen des Gehäuses 7 unterbrochen, sodass die transportierten Saatkörner wieder freigegeben. Anschließend werden die vereinzelten Saatkörner über Säschare in den Boden abgelegt.

Unterschiedliche Pflanzenkulturen weisen verschieden große und verschieden geformte Saatkörner auf. Zudem benötigen sie für ein optimales Wachstum unterschiedliche Abstände zwischen den Einzelpflanzen. Damit für jeden Saatguttyp eine optimale Vereinzelung und ein optimales Säbild erreicht werden, werden die Lochscheiben 8 abhängig von der anzupflanzenden Pflanzenkultur ausgetauscht.

Ein Bediener der Einzelkornsämaschine 2 baut für eine bevorstehende Arbeitsaufgabe die für die anzupflanzende Pflanzenkultur geeignete Lochscheibe 8 in die Vereinzelungsvorrichtung 6 ein. Dabei ist die Lochscheibe 8 mit einem Identifikationselement 10 ausgestattet. Mittels einer nicht dargestellten, geeigneten Erfassungsvorrichtung wird das Identifikationselement 10 erfasst.

Als Identifikationselement dient in einer Ausführungsform der Erfindung die Farbe der Lochscheibe 8. Eine beispielsweise aus Kunststoff gefertigte Lochscheibe 8 kann in beliebigen Farben gefertigt werden und zeigt damit einem Bediener vor dem Einbau und/oder während des Einbaus visuell an, ob er die richtige Lochscheibe 8 verbaut.

Mittels einer optischen Erfassungsvorrichtung wird die Farbe der Lochscheibe 8 sensorisch ermittelt. Notwendig ist dazu eine Anregungslichtquelle und eine Sensoreinheit zur spektralen Analyse des von der Lochscheibe 8 reflektierten Lichtes.

In ähnlicher Weise wird in einer weiteren Ausführungsform, dargestellt in Fig. 5, optisch die Oberflächenbeschaffenheit der Lochscheibe 8 erfasst. Dazu wird der Lochscheibe 8 ein typenspezifisches Muster 11 aufgeprägt. Dieses kann ganzflächig oder nur ein einem begrenzten Bereich der Oberfläche der Lochscheibe 8 aufgeprägt sein. Eine spektroskopische Analyse entfällt hierbei. Durch strukturierte Beleuchtung mittels einer monochromatischen Laserlichtquelle wird die Oberflächenstruktur der Lochscheibe 8 ermittelt.

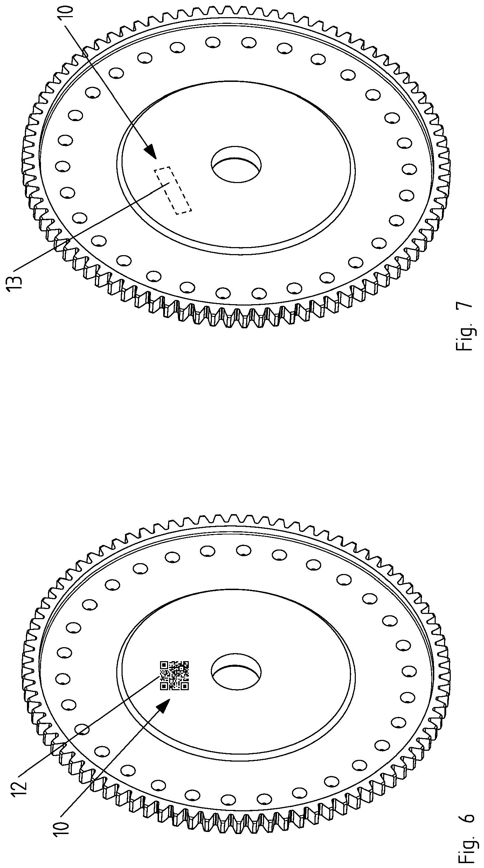

Analog zur optischen Erfassung eines typenspezifischen Musters 11 wird ein codiertes Identifikationselement 10 erfasst, wie es in Fig. 6 dargestellt ist. Der Lochscheibe 8 wird an geeigneter Stelle ein zweidimensionaler, optisch lesbarer QR-Code 12 aufgedruckt oder aufgeprägt. Der QR-Code 12 wird mittels eines geeigneten Laserscanners ausgelesen.

Fig. 7 zeigt eine weitere Ausführungsform der Erfindung. Das Identifikationselement 10 ist als RFID-Element 13 ausgeführt und geeignet zur Funkübertragung der hinterlegten Daten. Die Übertragung wird mittels Anregung durch elektromagnetische Wellen bewirkt. Das RFID-Element ist fest an der Lochscheibe 8 angebracht oder wird während der Herstellung der Lochscheibe 8 im Scheibenmaterial eingebettet, wie in Fig. 7 dargestellt ist. Das RFID-Element wird mittels eines elektromagnetischen Pulses angeregt und überträgt die hinterlegten Daten daraufhin an die Erfassungsvorrichtung.

Die aufgeführten Ausführungsformen der Erfindung sind geeignet, einen den Typ der Lochscheibe 8 charakterisierenden Code zu erfassen. Der durch die Erfassungsvorrichtung erfasste Code wird an eine nicht dargestellte Auswerteeinheit übermittelt. Die Auswerteeinheit weist einen Speicher auf, in dem eine Zuordnung zwischen dem erfassten Code und den zugehörigen Einstellparametern für die Einzelkornsämaschine 2 und/oder Vereinzelungsvorrichtung 6 hinterlegt ist.

Mittels der Zuordnung ermittelt die Auswerteeinheit anhand des erfassten Codes die für die bevorstehende Arbeitsaufgabe der Einzelkornsämaschine 2 notwendigen Einstellparamater. Die anschließende Einstellung der Einzelkornsämaschine 2 und/oder der Vereinzelungsvorrichtung 6 erfolgt automatisiert.

Die angeführte RFID-Technik ist geeignet, größere Informationsmengen im RFID-Element 13 zu hinterlegen. So können die Einstellparameter der Einzelkornsämaschine 2 und/oder der Vereinzelungsvorrichtung 6 direkt im RFID-Element 13 hinterlegt sein. Die Erfassung des RFID-Elements 13 liefert dann die Einstellparameter direkt an die Auswerteeinheit, ohne dass ein Speicher mit einer hinterlegten Zuordnung notwendig ist.

Nach den aufgeführten Methoden werden zumindest die Einstellparameter der Einzelkornsämaschine 2 und/oder Vereinzelungsvorrichtung 6 eingestellt, die den Vereinzelungsvorgang betreffen. Dazu zählen die Gebläsedrehzahl zur Einstellung der Druckdifferenz zwischen beiden durch die Lochscheibe 8 getrennten Seiten des Gehäuses 7, die Position und/oder die Stellung des Abdeck- und/oder Abstreifelements zur zuverlässigen Freigabe transportierter Saatkörner bzw. zum zuverlässigen Entfernen überschüssiger Körner und/oder die Arbeitsstellung des Regulationselements zur Regulation der der Vereinzelungsvorrichtung 6 zugeführten Saatgutmenge.

In analoger Weise kann die Drehzahl eines Rührelements eingestellt werden, das im Bereich der Ausflussöffnung des Behälters 5 angeordnet ist, und ein gleichmäßiges Ausfließen des körnigen Gutes bewirkt. Da die Fließeigenschaften von Saatgut von Form und Größe der Saatkörner abhängen, wird durch diese Einstellung ein Verstopfungen und/oder Verklumpungen im Bereich der Saatgutzuführung unterbunden.

Die Einzelkornsämaschine 2 weist zum Anlegen mehrerer Saatreihen mehrere Säaggregate 4 auf. Jedes dieser Säaggregate 4 ist mit einer aufgeführten, erfindungsgemäßen Vereinzelungsvorrichtung 6 ausgestattet. Der Bediener muss in jede Vereinzelungsvorrichtung 6 der Einzelkornsämaschine 2 eine geeignete Lochscheibe 8 einbauen. Baut der Bediener irrtümlicherweise verschiedenartige Lochscheiben 8 ein, liefern die Erfassungsvorrichtungen uneinheitliche Daten an Auswerteeinheit. Die Auswerteeinheit ist geeignet, derart uneinheitliche Daten zu erkennen und dem Bediener einen geeigneten Warnhinweis auszugeben.

Nach Erfassung des Typs der verbauten Lochscheiben 8 und erfolgter automatisierter Einstellung der Einzelkornsämaschine 2 und/oder Vereinzelungsvorrichtung 6 werden dem Bediener die gewählten Einstellungen auf dem Bildschirm eines Bedienterminals angezeigt. Der Bediener kann die Einstellungen bestätigen oder entsprechend besonderer Anforderungen korrigieren.

## Patentansprüche

1. Landwirtschaftliche Einzelkornsämaschine (2) mit zumindest einer Vereinzelungsvorrichtung (6) zur Vereinzelung körniger Güter, vorzugsweise zur Vereinzelung von Saatgut, wobei die Vereinzelungsvorrichtung (6) in einem Gehäuse (7) zumindest ein rotierend angetriebenes, austauschbares Vereinzelungselement (8) aufweist, in dem in regelmäßigen Abständen geeignete Aussparungen zur Mitnahme von einzelnen Körnern des körnigen Gutes angeordnet sind, wobei die Vereinzelungsvorrichtung (6) zumindest ein Erfassungssystem aufweist, **dadurch gekennzeichnet, dass** das Erfassungssystem aus einem Identifikationselement (10), welches das Vereinzelungselement (8) aufweist, und aus einer an geeigneter Stelle angeordneten Erfassungsvorrichtung zur Erfassung des Identifikationselements (10) besteht.

2. Einzelkornsämaschine (2) nach Anspruch 1, **dadurch gekennzeichnet, dass** das Identifikationselement (10) geeignet ist, die Art und/oder die Eigenschaften des eingesetzten Vereinzelungselements (8) eindeutig zu charakterisieren.

3. Einzelkornsämaschine (2) nach zumindest einem der vorangegangenen Ansprüche, **dadurch gekennzeichnet, dass** mittels des Erfassungssystems Daten aus dem Identifikationselement (10) gelesen werden können und dass auf Basis der gelesenen Daten die Einstellparameter für die landwirtschaftliche Einzelkornsämaschine (2) und/oder die Vereinzelungsvorrichtung (6) ermittelt werden und die Einstellung der landwirtschaftlichen Einzelkornsämaschine (2) und/oder der Vereinzelungsvorrichtung (6) automatisiert erfolgt.

4. Einzelkornsämaschine (2) nach zumindest einem der vorangegangenen Ansprüche, **dadurch gekennzeichnet, dass** das Identifikationselement (10) einen auslesbaren Identifikationscode enthält und aus einer in einem Speicher hinterlegten Zuordnung anhand des Identifikationscodes die Einstellparameter für die landwirtschaftliche Einzelkornsämaschine (2) und/oder die Vereinzelungsvorrichtung (6) ermittelt werden.

5. Einzelkornsämaschine (2) nach zumindest Anspruch 4, **dadurch gekennzeichnet, dass** der Identifikationscode durch die Oberflächenbeschaffenheit und/oder die Farbe des Vereinzelungselements (8) gegeben ist.

6. Einzelkornsämaschine (2) nach zumindest Anspruch 4, **dadurch gekennzeichnet, dass** der Identifikationscode durch eine kontaktfrei lesbare Zeichenfolge gegeben ist.

7. Einzelkornsämaschine (2) nach zumindest einem der vorangegangenen Ansprüche, **dadurch gekennzeichnet, dass** das Identifikationselement (10) die Einstellparameter für die landwirtschaftliche Einzelkornsämaschine (2) und/oder die Vereinzelungsvorrichtung (6) enthält.

8. Einzelkornsämaschine (2) nach zumindest einem der vorangegangenen Ansprüche, **dadurch gekennzeichnet, dass** die geeignete Erfassungsvorrichtung ein Sensor zur kontaktfreien Erfassung des Identifikationselements (10) ist.

9. Einzelkornsämaschine (2) nach einem der Ansprüche 4 oder 7, wobei das Gehäuse (7) durch das Vereinzelungselement derart in einen ersten und einen zweiten Bereich unterteilt wird, dass mittels eines Gebläses eine Druckdifferenz zwischen dem ersten und dem zweiten Bereich herstellbar ist, durch welche sich einzelne Körner des körnigen Gutes in den Aussparungen des Vereinzelungselements (8) anlagern und die Vereinzelungsvorrichtung (6) ein Abdeck- und/oder Abstreifelement zur zeitweisen Unterbrechung der Druckdifferenz und zum Verhindern der fortdauernden Anlagerung der transportierten Körner aufweist und die Einzelkornsämaschine (2) ein Regulationselement zur Regelung der dem Vereinzelungselement zugeführten Saatgutmenge aufweist, **dadurch gekennzeichnet, dass** die Einstellparameter der landwirtschaftlichen Einzelkornsämaschine (2) und/oder der Vereinzelungsvorrichtung (6) auf der mit dem eingesetzten Vereinzelungselement zur Pflanzung vorgesehenen Pflanzenkultur basieren und zumindest die Drehzahl des Gebläses, die Position und/oder die Stellung des Abdeck- und/oder Abstreifelements und/oder die Arbeitsstellung des Regulationselements sind.

10. Einzelkornsämaschine nach Anspruch 9, wobei die Einzelkornsämaschine (2) zumindest einen Behälter (5) zur Bevorratung zumindest eines körnigen Gutes aufweist und der zumindest eine Behälter (5) eine Ausflussöffnung aufweist, in deren Bereich ein Rührelement angeordnet ist, welches ein gleichmäßiges Ausfließen des körnigen Gutes ermöglicht, **dadurch gekennzeichnet, dass** ein weiterer Einstellparameter der landwirtschaftlichen Einzelkornsämaschine (2) und/oder der Vereinzelungsvorrichtung (6) die Drehzahl des Rührelements ist.

11. Einzelkornsämaschine (2) nach zumindest einem der vorangegangenen Ansprüche, **dadurch gekennzeichnet, dass** bei Verwendung mehrerer Vereinzelungsvorrichtungen (6) anhand der Erfassung der Daten der Identifikationselemente (10) der jeweils eingesetzten Vereinzelungselements (8) festgestellt wird, ob alle eingesetzten Vereinzelungselemente (8) identisch sind und bei widersprüchlichen Daten ein geeigneter Warnhinweis ausgegeben wird.

12. Einzelkornsämaschine (2) nach zumindest einem der vorangegangenen Ansprüche, **dadurch gekennzeichnet, dass** nach erfolgter automatisierter Einstellung der Einstellparameter der landwirtschaftlichen Einzelkornsämaschine (2) und/oder der Vereinzelungsvorrichtung (6) einem Bediener die Kontrolle und/oder Korrektur der Einstellparameter möglich ist.

## Claims

1. Agricultural single-grain seeder (2) having at least one separating apparatus (6) for separating grain material, preferably for separating seed material, wherein the separating apparatus (6), in a housing (7), has at least one rotationally driven, interchangeable separating element (8), in which suitable apertures are arranged at regular intervals in order to carry along individual grains of the grain material, wherein the separating apparatus (6) has at least one sensing system, **characterized in that** the sensing system comprises an identification element (10), which has the separating element (8), and also comprises a sensing device, which is arranged at a suitable location and is intended for sensing the identification element (10).

2. Single-grain seeder (2) according to Claim 1, **characterized in that** the identification element (10) is suitable for clearly denoting the type and/or the properties of the separating element (8) used.

3. Single-grain seeder (2) according to at least one of the preceding claims, **characterized in that** the sensing system can read data from the identification element (10), and **in that**, on the basis of the data read, the setting parameters for the agricultural single-grain seeder (2) and/or for the separating apparatus (6) are determined and the agricultural single-grain seeder (2) and/or the separating apparatus (6) are/is set in an automated manner.

4. Single-grain seeder (2) according to at least one of the preceding claims, **characterized in that** the identification element (10) contains a read-out identification code, and the setting parameters for the agricultural single-grain seeder (2) and/or for the separating apparatus (6) are determined from an association, on the basis of the identification code, stored in a memory.

5. Single-grain seeder (2) according to at least Claim 4, **characterized in that** the identification code is provided by the surface finish and/or the colour of the separating element (8).

6. Single-grain seeder (2) according to at least Claim 4, **characterized in that** the identification code is provided by a string of characters which can be read in a contact-free manner.

7. Single-grain seeder (2) according to at least one of the preceding claims, **characterized in that** the identification element (10) contains the setting parameters for the agricultural single-grain seeder (2) and/or for the separating apparatus (6).

8. Single-grain seeder (2) according to at least one of the preceding claims, **characterized in that** the suitable sensing device is a sensor for sensing the identification element (10) in a contact-free manner.

9. Single-grain seeder (2) according to either of Claims 4 and 7, wherein the housing (7) is subdivided, by the separating element, into a first region and a second region such that a fan can establish a difference in pressure between the first region and the second region, said difference in pressure causing individual grains of the grain material to accumulate in the apertures of the separating element (8), and the separating apparatus (6) has a covering and/or stripping element for temporarily interrupting the difference in pressure and for preventing the continued accumulation of the grains transported, and the single-grain seeder (2) has a regulation element for regulating the quantity of seed material fed to the separating element, **characterized in that** the setting parameters of the agricultural single-grain seeder (2) and/or of the separating apparatus (6) are based on the plant culture provided for planting with the separating element used and are at least the rotational speed of the fan, the position of the covering and/or stripping element and/or the operating position of the regulation element.

10. Single-grain seeder according to Claim 9, wherein the single-grain seeder (2) has at least one container (5) for storing at least one grain material and the at least one container (5) has an outflow opening, in the region of which is arranged and agitating element which provides for uniform outflow of the grain material, **characterized in that** a further setting parameter of the agricultural single-grain seeder (2) and/or of the separating apparatus (6) is the rotational speed of the agitating element.

11. Single-grain seeder (2) according to at least one of the preceding claims, **characterized in that**, if use is made of a plurality of separating apparatuses (6), it is ascertained, on the basis of sensing the data from the identification elements (10) of the separating element (8) used in each case, whether all the separating elements (8) used are identical and, in the event of data being inconsistent, a suitable warning message is given.

12. Single-grain seeder (2) according to at least one of the preceding claims, **characterized in that**, once the setting parameters of the agricultural single-grain seeder (2) and/or of the separating apparatus (6) have been set in an automated manner, it is possible for an operator to monitor and/or correct the setting parameters.

## Revendications

1. Semoir agricole mono-graine (2) comprenant au moins un dispositif de séparation (6) pour la séparation de produits granulaires, de préférence pour la séparation de semences, dans lequel le dispositif de séparation (6) comporte, dans un boîtier (7), au moins un élément de séparation (8) interchangeable et entraîné en rotation, dans lequel sont disposés à intervalles réguliers des évidements appropriés pour y recevoir des graines isolées du produit granulaire, dans lequel le dispositif de séparation (6) comporte au moins un système de détection, **caractérisé en ce que** le système de détection est constitué d'un élément d'identification (10) qui comporte l'élément de séparation (8), et d'un dispositif de détection disposé à un emplacement approprié pour détecter l'élément d'identification (10).

2. Semoir agricole mono-graine (2) selon la revendication 1, **caractérisé en ce que** l'élément d'identification (10) est apte à caractériser de manière unique le type et/ou les propriétés de l'élément de séparation (8) utilisé.

3. Semoir agricole mono-graine (2) selon au moins l'une des revendications précédentes, **caractérisé en ce que** des données peuvent être lues à partir de l'élément d'identification (10) au moyen du système de détection et **en ce que** les paramètres de réglage du semoir agricole mono-graine (2) et/ou du dispositif de séparation (6) sont déterminés sur la base des données lues, et le réglage du semoir agricole mono-graine (2) et/ou du dispositif de séparation (6) s'effectue de manière automatisée.

4. Semoir agricole mono-graine (2) selon au moins l'une des revendications précédentes, **caractérisé en ce que** l'élément d'identification (10) contient un code d'identification lisible et **en ce qu'**à partir d'une association stockée dans une mémoire, les paramètres de réglage du semoir agricole mono-graine (2) et/ou du dispositif de séparation (6) sont déterminés sur la base du code d'identification.

5. Semoir agricole mono-graine (2) selon au moins la revendication 4, **caractérisé en ce que** le code d'identification est défini par la qualité de surface et/ou la couleur de l'élément de séparation (8).

6. Semoir agricole mono-graine (2) selon au moins la revendication 4, **caractérisé en ce que** le code d'identification est défini par une séquence de caractères qui peut être lue sans contact.

7. Semoir agricole mono-graine (2) selon au moins l'une des revendications précédentes, **caractérisé en ce que** l'élément d'identification (10) contient les paramètres de réglage du semoir agricole mono-graine (2) et/ou du dispositif de séparation (6).

8. Semoir agricole mono-graine (2) selon au moins l'une des revendications précédentes, **caractérisé en ce que** le dispositif de détection approprié est un capteur permettant la détection sans contact de l'élément d'identification (10).

9. Semoir agricole mono-graine (2) selon l'une des revendications 4 ou 7, dans lequel le boîtier (7) est divisé par l'élément de séparation en des première et seconde zones de manière à ce qu'une différence de pression entre les première et seconde zones puisse être établie au moyen d'une soufflante, à l'aide de laquelle des graines individuelles du produit granulaire se déposent dans les évidements de l'élément de séparation (8), et le dispositif de séparation (6) comporte un élément de recouvrement et/ou de raclage permettant d'interrompre temporairement la différence de pression et d'empêcher le dépôt continu des graines transportées, et le semoir agricole mono-graine (2) comporte un élément de régulation permettant de réguler la quantité de semences fournie à l'élément de séparation,
**caractérisé en ce que** les paramètres de réglage du semoir agricole mono-graine (2) et/ou du dispositif de séparation (6) sont basés sur la culture végétale pourvue de l'élément de séparation utilisé pour la plantation et sont au moins la vitesse de rotation de la soufflante, la position et/ou le réglage de l'élément de recouvrement et/ou de raclage et/ou la position de travail de l'élément de régulation.

10. Semoir agricole mono-graine selon la revendication 9, dans lequel le semoir agricole mono-graine (2) comporte au moins un conteneur (5) permettant de stocker au moins un produit granulaire, et ledit au moins un conteneur (5) présente une ouverture de sortie dans la zone de laquelle est disposé un élément agitateur, qui permet au produit granulaire de sortir de manière uniforme, **caractérisé en ce qu'**un autre paramètre de réglage du semoir agricole mono-graine (2) et/ou du dispositif de séparation (6) est la vitesse de rotation de l'élément agitateur.

11. Semoir agricole mono-graine (2) selon au moins l'une des revendications précédentes, **caractérisé en ce que**, lors de l'utilisation d'une pluralité de dispositifs de séparation (6), il est déterminé, sur la base de l'acquisition des données des éléments d'identification (10) des éléments de sélection (8) respectivement utilisés, si tous les éléments de séparation (8) utilisés sont identiques et **en ce que**, dans le cas de données contradictoires, un avertissement approprié est émis.

12. Semoir agricole mono-graine (2) selon au moins l'une des revendications précédentes, **caractérisé en ce qu'**un opérateur peut vérifier et/ou corriger les paramètres de réglage après que les paramètres de réglage du semoir agricole mono-graine (2) et/ou du dispositif de séparation (6) ont été réglés automatiquement.
